# EUROPÄISCHE PATENTANMELDUNG

(11) **EP 2 704 299 A1**
(43) Veröffentlichungstag der Anmeldung: **05.03.2014**
(21) Anmeldenummer: 12181841.3
(22) Anmeldetag: 27.08.2012
(51) Int. Cl.: H02K 29/08

(54) **Elektromotorische Kfz-Flüssigkeits-Förderpumpe**

(71) Anmelder: Pierburg Pump Technology GmbH, 41460 Neuss (DE)
(72) Erfinder: Joschko, Witold, 47906 Kempen (DE); Wienecke, Thomas, 47877 Willich (DE); Gibat, Thomas Joachim, 47839 Krefeld (DE); Riefers, Stephan, 47803 Krefeld (DE); Bürger, Frank, 52379 Langerwehe (DE); Zacher, Dr., Wolfgang, 04720 Döbeln (DE)
(74) Vertreter: Patentanwälte ter Smitten Eberlein Rütten Partnerschaftsgesellschaft

(57) **Zusammenfassung**

Die Erfindung betrifft eine elektromotorische Kfz-Flüssigkeits-Förderpumpe (2) mit einem elektrisch kommutierten Motorstator (6) und einem permanent erregten Motorrotor (8), der auf einer Rotorwelle (12) angeordnet ist, mit mindestens einem ferromagnetischen Flussleitelement (36), dass achsparallel zu der Rotorwelle (12) verläuft und mit einem Hallsensor (28), der auf einer Platine (20) beabstandet zum Motorrotor (8) angeordnet ist, wobei die Rotorwelle (12) aus einem ferromagnetischen Material gefertigt ist und dass ein zweites ferromagnetisches Flussleitelement (32) vorgesehen ist, das mit einem ersten Ende (40) auf der Platine (20) in Höhe einer Achsenverlängerung der Rotorwelle (12) angeordnet ist und mit einem zweiten Ende (42) im Bereich des Hallsensors (28) angeordnet ist.

## Beschreibung

Die Erfindung betrifft eine elektromotorische Kfz-Flüssigkeits-Förderpumpe mit einem elektrisch kommutierten Motorstator und einem permanent erregten Motorrotor, der auf einer Rotorwelle angeordnet ist, mit mindestens einem ferromagnetischen Flussleitelement, das achsparallel zu der Rotorwelle verläuft und mit einem Hallsensor, der auf einer Platine beabstandet zum Motorrotor angeordnet ist.

Eine elektromotorische Förderpumpe weist einen elektronisch kommutierten Motorstator und einen permanent erregten Motorrotor auf. Derartige Förderpumpen werden beispielsweise als Kühlmittelpumpen eingesetzt. Um eine Rotorlage-Information für die elektronische Kommutierung zu erhalten, ist ein Hallsensor beabstandet zum Rotor angeordnet.

Zur Erkennung der Rotorlage und/oder der Rotordrehzahl werden Magnetfeld empfänglich Sensorelemente, insbesondere Hallsensoren, eingesetzt. Bei derartigen Anordnungen ist eine zuverlässige Auswertung des entsprechenden Magnetfeldes oft schwierig, da, je nach räumlicher Anordnung des Hallsensors, das magnetische Feld an der Stelle des Hallsensors sehr schwach sein kann. Weiterhin kann die Rotorlageerkennung durch Streufelder verfälscht werden, die zum Beispiel durch Ströme in den Statorwicklungen verursacht werden.

Eine Lösung für derartige Probleme findet sich beispielsweise in der DE 10 2005 004 322 A1, die eine elektrische Maschine mit einer Sensorvorrichtung offenbart. Um eine bessere Rotorlageerkennung zu gewährleisten, weist die Anordnung ein ferromagnetisches Flussleitelement auf, das einen Rückschluss zur gezielten Führung des magnetischen Flusses zwischen zwei gegensinnigen Polen eines Gebermagneten bildet. Nachteilig ist bei dieser Lösung, dass der Gebermagnet einen axialen Überstand gegenüber dem Stator aufweisen muss, damit das Flussleitelement entlang des Gebermagneten angeordnet werden kann, wodurch erhöhte Materialkosten zur Herstellung des Gebermagneten entstehen. Des Weiteren ist eine derartige Anordnung aufwendig in der Fertigung und erfordert mehr Bauraum.

Hinsichtlich einer einfacheren und kostengünstigeren Anordnung zur Lageerkennung des Rotors bei einer elektromotorischen Förderpumpe ist es aus der EP 2 450 575 A1 bekannt, bei einer elektromotorischen Kfz-Flüssigkeits-Förderpumpe mit einem Spalttopf das ferromagnetische Flussleitelement in einer Ausnehmung des Spalttopfes anzuordnen.

Es hat sich nun gezeigt, dass auch diese Anordnung hinsichtlich der Streufeldproblematik und der damit verbundenen Einschränkungen der Hallsensorpositionierung verbesserungswürdig ist.

Es ist daher Aufgabe der Erfindung, eine elektromotorische Kfz-Flüssigkeits-Förderpumpe bereitzustellen, die auf kostengünstige und montagetechnisch einfache Weise mögliche Streufelder noch weiter zu minimieren und dementsprechend das magnetische Feld im Bereich des Hallsensors zu optimieren, derart, dass die Flexibilität des Hallsensors hinsichtlich der Anordnung auf der Platine noch weiter erhöht werden kann.

Diese Aufgabe wird dadurch gelöst, dass die Rotorwelle aus einem ferromagnetischen Material gefertigt ist und dass ein zweites ferromagnetisches Flussleitelement vorgesehen ist, das mit einem ersten Ende auf der Platine in Höhe einer Achsverlängerung der Rotorwelle angeordnet ist und mit einem zweiten Ende im Bereich des Hallsensors angeordnet ist.

Auf diese einfache und kostengünstige Weise wird ein "magnetischer Hallkreis" geschaffen, der es möglich macht, den Hallsensor an Stellen zu platzieren, an denen es ohne diese erfinderische Anordnung nicht möglich wäre, die Rotorlage sicher und unverfälscht zu erkennen. Des Weiteren kann auf spezielle Hallsensorhalter verzichtet werden, da der Hallsensor nicht mehr so genau in einer bestimmten Position platziert werden muss.

Insbesondere, wenn der Motorrotor als innenliegend und der Motorstator als außenliegend ausgeführt ist, ist der Luftspalt bei derartigen Anordnungen sehr klein, wodurch diese Lösung besonders geeignet erscheint.

In besonders vorteilhafter Weise kann ein drittes ferromagnetisches Flussleitelement vorgesehen sein, das sich ausgehend vom zweiten ferromagnetischen Flussleitelement koaxial zur Rotorwelle erstreckt. Hierdurch wird die Streufeldneigung noch weiter minimiert. Das dritte ferromagnetische Flussleitelement kann vorteilhafterweise als Schrauben- oder Nietenelement ausgeführt sein, wobei es insbesondere hierdurch möglich ist, dass das dritte ferromagnetische Flussleitelement als Befestigungselement der Platine dient, was montagetechnische Vorteile bietet und dementsprechend zur reduzierten Fertigungskosten führt.

In vorteilhafter Weise kann das erste ferromagnetische Flussleitelement axial zum Motorrotor angeordnet sein.

Vor dem Hintergrund des besonderen Einsatzgebietes kann in vorteilhafter Weise ein Spalttopf oder ein Spaltrohr den Nassbereich mit dem Motorrotor und mit einem Pumpenrotor von dem den Motorstator aufweisenden Trockenbereich trennen. Hierbei ist es dann auch vorteilhaft, wenn das erste ferromagnetische Flussleitelement in einer Ausnehmung des Spalttopfes oder in einem Deckelteil für das Spaltrohr angeordnet ist.

Der Hallsensor kann in vorteilhafter Weise ein SMD-Bauteil sein, das in einer Querebene liegend vorgesehen ist. Hierbei kann auch auf der Platine eine Steuereinheit vorgesehen sein. In besonders vorteilhafter Weise ist die Platine nur auf ihrer motorabgewandten Seite einseitig bestückt. Auch kann die Platine an der zum Motorrotor gerichteten Seite einen Kühlboden aufweisen, in dem die als Leistungshalbleiter ausgebildete Steuereinheit angeordnet ist, In einer vorteilhaften Ausführungsform weist die Platine im Bereich des Hallsensors eine Öffnung auf, in die das erste ferromagnetische Flussleitelement teilweise hineinragen kann, wodurch der Luftspalt zwischen dem Hallsensor und dem Flussleitelement verkleinert wird, was als Folge geringere magnetische Verluste bewirkt.

Vorzugsweise ist die Förderpumpe eine Kühlmittelpumpe, da sich die erfindungsgemäße Förderpumpe insbesondere durch ihre kompakte und kostengünstige Bauweise für den Einsatz im Bauraum begrenzten Motorinnenraum zur Regelung des Kühlkreislaufes eignet.

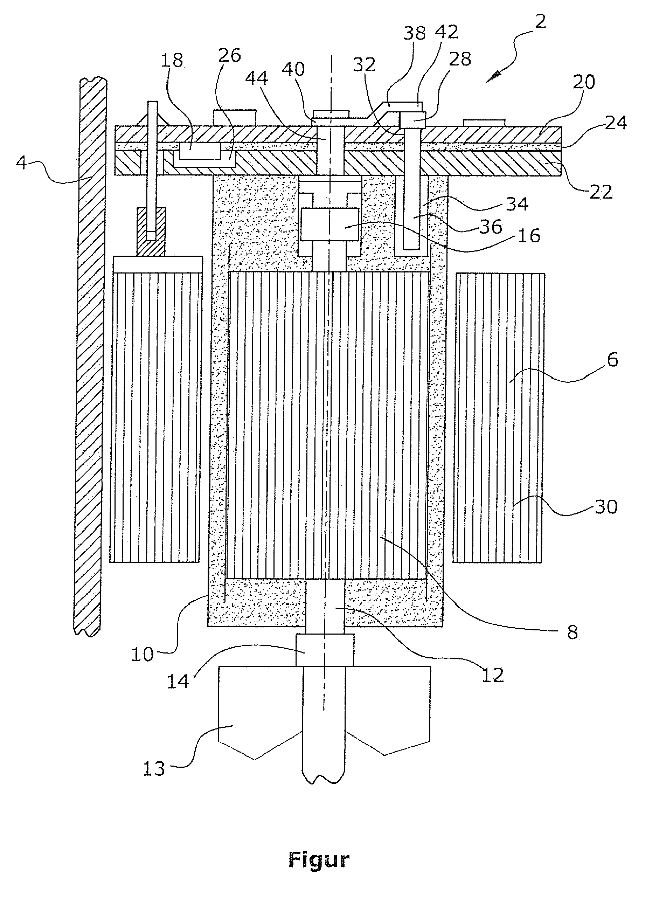

Die Erfindung wird anhand eines Längsquerschnittes einer erfindungsgemäßen Förderpumpe in der beiliegenden Figur näher beschrieben.

Die einzige Erfindung zeigt in schematischer Weise eine erfindungsgemäße Kfz-Flüssigkeits-Förderpumpe 2 mit einem teilweise angedeuteten Gehäuse 4. In dem Gehäuse 4 ist ein außenliegender elektronisch kommutierter Motorstator 6 angeordnet, der auf bekannte Weise mit einem im Wesentlichen aus Permanentmagneten bestehenden Motorrotor 8 in Wirkverbindung steht. Motorstator 6 und Motorrotor 8 sind durch einen Spalttopf 10 fluiddicht voneinander getrennt. Das hat zur Folge, dass der Motorstator 6 sich in einem Trockenbereich befindet und der Motorrotor 8 als Nassläufer in einem Kühlmedium angeordnet ist. Der Motorrotor 8 ist auf einer Rotorwelle 12 angeordnet, wobei Lager 14, 16 vorgesehen sind, die die Rotorwelle 12 und damit den Rotor 8 drehbar lagern. Die Rotorwelle 12 weist darüber hinaus auf bekannte Weise einen Pumpenrotor 13 auf.

Eine für eine elektronische Kommutierung notwendige Steuereinheit 18 ist im vorliegenden Ausführungsbeispiel als Leistungshalbleiter an einer Unterseite einer Platine 20 vorgesehen. Die Unterseite der Platine 20 besitzt einen Kühlboden 22, der mittels eines Wärmeleitklebers 24 mit der Platine 20 verbunden ist. Der Leistungshalbleiter 18 ist in einer speziell hierfür vorgesehenen Aussparung 26 angeordnet. Der Kühlboden 22 steht im Rotorbereich in Verbindung mit dem mit Kühlmedium gefüllten Spalttopf 10, wodurch eine effektive Kühlwirkung gewährleistet ist. Auf der vom Motorrotor 8 abgewandten Seite der Platine 20 ist achsparallel und beabstandet zur Rotorwelle 12 ein Hallsensor 28 vorgesehen. Zur Erzeugung eines Drehfeldes werden die Statorwicklungen 30 des Motorstators 6 durch die Steuereinheit 18 angesteuert. Der genaue Zeitpunkt zur Bestromung der Statorwicklungen 30 hängt dabei insbesondere von der Rotorlage bzw. der Rotordrehzahl des Motorrotors 8 ab. Die Lageerkennung des Motorrotors 8 erfolgt mittels des Hallsensors 28, der wie oben beschrieben, auf der Platine 20 angeordnet ist. Der Hallsensor 28 ist hierbei als SMD-Bauteil ausgeführt und wird mittels lötfähigen Anschlussstellen direkt auf der Platine 20 montiert. Zwischen dem Hallsensor 28 und der Steuereinheit 18 ist eine Signalleitung vorgesehen, so dass das Sensorsignal des Hallsensors 28 als Eingangssignal in die Steuereinheit 18 übertragen, ausgewertet und zur Bestimmung des idealen Kommutierungszeitpunktes benutzt wird.

Die Platine 20 und der Kühlboden 22 besitzen darüber hinaus an der Stelle, an der der Hallsensor 28 angeordnet ist, eine axial durchgängige Öffnung 32, die in einer Ausnehmung 34 im Spalttopf 10 mündet. In dieser Ausnehmung 34 und mit dem Hallsensor 28 verbunden, ist ein erstens ferromagnetisches Flussleitelement 36, das hier als Metallstift ausgebildet ist, angeordnet. Auf diese Weise kann die Flussdichte an der Position des Hallsensors 28 schon verbessert werden. Um nun die Flussdichte noch weiter zu verbessern und damit die Flexibilität der Positionierung des Hallsensors 28 zu erhöhen, ist zunächst die Rotorwelle 12 aus einem ferromagnetischen Material gefertigt. Des Weiteren ist ein zweites ferromagnetisches Flussleitelement 38 vorgesehen, das mit einem ersten Ende 40 auf der Platine 20 in Höhe einer Achsenverlängerung der Rotorwelle 12 angeordnet ist und mit einem zweiten Ende 42 im Bereich des Hallsensors 28, hier auf dem Hallsensor 28 angeordnet ist. Als drittes ferromagnetisches Flussleitelement 44 ist eine Schraube vorgesehen, die sich ausgehend vom zweiten ferromagnetischen Flussleitelement 38 koaxial zur Rotorwelle 12 erstreckt und die gleichzeitig als Befestigungselement der Platine 20 dient. Es sollte deutlich sein, dass auf diese Weise ein magnetischer Hallkreis gebildet wird, der eine optimale Flussdichtung im Bereich des Hallsensors 28 gewährleistet, unabhängig von der Positionierung des Halssensors 28.

Selbstverständlich ist der Schutzumfang der Anmeldung nicht auf das beschriebene Ausführungsbeispiel beschränkt. Auch sind konstruktive Änderungen an der Förderpumpe, wie zum Beispiel eine Ausführung mit einem außenliegenden Motorrotor selbstverständlich durchführbar, ohne den Schutzbereich des Hauptanspruchs zu verlassen.

## Patentansprüche

1. Elektromotorische Kfz-Flüssigkeits-Förderpumpe (2) mit einem elektrisch kommutierten Motorstator (6) und einem permanent erregten Motorrotor (8), der auf einer Rotorwelle (12) angeordnet ist, mit mindestens einem ferromagnetischen Flussleitelement (36), dass achsparallel zu der Rotorwelle (12) verläuft und mit einem Hallsensor (28), der auf einer Platine (20) beabstandet zum Motorrotor (8) angeordnet ist, **dadurch gekennzeichnet, dass** die Rotorwelle (12) aus einem ferromagnetischen Material gefertigt ist und dass ein zweites ferromagnetisches Flussleitelement (32) vorgesehen ist, das mit einem ersten Ende (40) auf der Platine (20) in Höhe einer Achsenverlängerung der Rotorwelle (12) angeordnet ist und mit einem zweiten Ende (42) im Bereich des Hallsensors (28) angeordnet ist.

2. Elektromotorische Kfz-Flüssigkeits-Förderpumpe (2) nach Anspruch 1, **dadurch gekennzeichnet, dass** der Motorrotor (8) als innenliegend und der Motorstator (6) als außenliegend ausgeführt ist.

3. Elektromotorische Kfz-Flüssigkeits-Förderpumpe (2) nach Anspruch 1 oder 2, **dadurch gekennzeichnet, dass** ein drittes ferromagnetisches Flussleitelement (44) vorgesehen ist, das sich ausgehend vom zweiten ferromagnetisches Flussleitelement (38) koaxial zur Rotorwelle (12) erstreckt.

4. Elektromotorische Kfz-Flüssigkeits-Förderpumpe (2) nach Anspruch 3, **dadurch gekennzeichnet, dass** das dritte ferromagnetische Flussleitelement (44) als Schrauben- oder Nietenelement ausgeführt ist.

5. Elektromotorische Kfz-Flüssigkeits-Förderpumpe (2) nach Anspruch 3 oder 4, **dadurch gekennzeichnet, dass** das dritte ferromagnetische Flussleitelement (44) als Befestigungselement der Platine (20) dient.

6. Elektromotorische Kfz-Flüssigkeits-Förderpumpe (2) nach einem der vorhergehenden Ansprüche, **dadurch gekennzeichnet, dass** das erste ferromagnetische Flussleitelement (36) axial zum Motorrotor (8) angeordnet ist.

7. Elektromotorische Kfz-Flüssigkeits-Förderpumpe (2) nach einem der vorhergehenden Ansprüche, **dadurch gekennzeichnet, dass** ein Spalttopf oder Spaltrohr (10) einen Nassbereich mit dem Motorrotor (8) und mit einem Pumpenrotor (13) von einem den Motorstator (6) aufweisenden Trockenbereich trennt.

8. Elektromotorische Kfz-Flüssigkeits-Förderpumpe (2) nach Anspruch 6, **dadurch gekennzeichnet, dass** das erste ferromagnetische Flussleitelement (36) in einer Ausnehmung des Spalttopfes (10) oder in einer Ausnehmung eines Deckelteils für das Spaltrohr angeordnet ist.

9. Elektromotorische Kfz-Flüssigkeits-Förderpumpe (2) nach einem der vorhergehenden Ansprüche, **dadurch gekennzeichnet, dass** der Hallsensor (28) ein SMD-Bauteil ist, das in einer Querebene liegend vorgesehen ist.

10. Elektromotorische Kfz-Flüssigkeits-Förderpumpe (2) nach einem der vorhergehenden Ansprüche, **dadurch gekennzeichnet, dass** auf der Platine (20) eine Steuereinheit (18) vorgesehen ist.

11. Elektromotorische Kfz-Flüssigkeits-Förderpumpe (2) nach einem der vorhergehenden Ansprüche, **dadurch gekennzeichnet, dass** die Platine (20) nur auf ihrer motorabgewandten Seite einseitig bestückt ist.

12. Elektromotorische Kfz-Flüssigkeits-Förderpumpe (2) nach einem der Ansprüche 1 - 10, **dadurch gekennzeichnet, dass** die Platine (20) an der zum Motorrotor (8) gerichteten Seite einen Kühlboden (22) aufweist, in dem die als Leistungshalbleiter ausgebildete Steuereinheit (18) angeordnet ist.

13. Elektromotorische Kfz-Flüssigkeits-Förderpumpe (2) nach einem der vorhergehenden Ansprüche, **dadurch gekennzeichnet, dass** die Platine (20) im Bereich des Hallsensors (28) eine Öffnung (32) aufweist.

14. Elektromotorische Kfz-Flüssigkeits-Förderpumpe (2) nach einem der vorhergehenden Ansprüche, **dadurch gekennzeichnet, dass** die Förderpumpe (2) eine Kühlmittelpumpe ist.
